# EUROPÄISCHE PATENTANMELDUNG

(11) **EP 1 703 167 A1**
(43) Veröffentlichungstag der Anmeldung: **20.09.2006**
(21) Anmeldenummer: 05005982.3
(22) Anmeldetag: 18.03.2005
(51) Int. Cl.: F16F 15/123, F16F 15/134

(54) **Torsionsschwingungsdämpfer**

(71) Anmelder: BorgWarner Inc., Auburn Hills, MI 48326-2872 (US)
(72) Erfinder: Bölling, Jochen, 76534 Baden-Baden (DE); Strauss, Dietmar, 76703 Kraichtal (DE)
(74) Vertreter: Patentanwälte Westphal, Mussgnug & Partner

(57) **Zusammenfassung**

Die Erfindung betrifft einen Torsionsschwingungsdämpfer (1) mit einem motorseitigen Primärelement (12) mit wenigstens einem Primäransteuerelement (16a, 16b) und mit einem getriebeseitigen Sekundärelement (10, 11) mit wenigstens einem Sekundäransteuerelement (15al, 15bl, 15a2, 15b2) und mit mindestens einer Federeinrichtung (A, B) zur federelastischen Kopplung von Primärelement (12) und Sekundärelement (10, 11), wobei die Federeinrichtung (A, B) wenigstens ein Hauptfederelement (23a) sowie wenigstens ein parallel zu dem Hauptfederelement (23a) geschaltetes Unterfederelement (23b) aufweist, wobei das Hauptfederelement (23a) zu einem einendseitigen Abstützen an einem der Primäransteuerelemente (16a, 16b) und an einem der Sekundäransteuerelemente (10, 11) vorgesehen ist. Erfindungsgemäß ist das Unterfederelement (23i) derart angeordnet-, dass sich das Unterfederelement (23i) in einem Zugbetrieb und/oder in einem Schubbetrieb und/oder bei einem Lastwechsel nicht gegen das Sekundäransteuerelement (10, 11) abstützen kann.

## Beschreibung

Die Erfindung betrifft einen Torsionsschwingungsdämpfer gemäß dem Oberbegriff des Patentanspruchs 1.

Torsionsschwingungsdämpfer, insbesondere nasslaufende Torsionsschwingungsdämpfer, sind aus dem Stand der Technik in einer Vielzahl von Abwandlungen bekannt. Insbesondere werden sie z.B. im Kraftfahrzeugbau zur elastischen Kopplung von Verbrennungskraftmaschine und Antriebsstrang eingesetzt. Auf diese Weise soll weitestgehend verhindert werden, dass Schwingungen von der Seite der Verbrennungskraftmaschine auf den Antriebsstrang bzw. das Getriebe übertragen werden. Eine solche Übertragung von Schwingungen ist bei Kraftfahrzeugantrieben vor allen Dingen bei Verbrennungskraftmaschinen mit vergleichsweise wenigen Zylindern und bei niedrigen Drehzahlen gegeben. Bei effektiver Dämpfung derartiger Schwingungen kann die Verbrennungskraftmaschine mit niedrigeren Drehzahlen betrieben werden, was im Allgemeinen einen verringerten Kraftstoffverbrauch zur Folge hat und somit sowohl ökonomisch als auch ökologisch von Vorteil ist.

Aus der EP 1 371 875 A1 und der DE 195 22 718 A1 sind Torsionsschwingungsdämpfer mit einem antriebsseitigen Primärelement und einem abtriebsseitigen Sekundärelement bekannt, bei denen das Primär- und das Sekundärelement über eine Federeinrichtung miteinander gekoppelt und um eine Ruhe- und/oder Neutralposition gegeneinander verdrehbar sind. Primär- wie Sekundärelement umfassen jeweils einen Mitnehmer, welche im Folgenden als Primäransteuerelement bzw. Sekundäransteuerelement bezeichnet werden. Ein antriebsseitig am Primärelement anliegendes Drehmoment wird mittels des Primäransteuerelements zunächst auf die Federeinrichtung und von dort auf das Sekundäransteuerelement des Sekundärelements übertragen.

Die genannte Federeinrichtung besteht üblicherweise aus einem oder mehreren in Umfangsrichtung des Torsionsschwingungsdämpfers hintereinander angeordneten Federelementen, welche vorzugsweise als Schraubenfedern bzw. Schraubenfedersätze ausgeführt sind. Zwischen den Federelementen sind Gleitschuhe angeordnet, welche die aufeinander folgenden Federelemente miteinander verbinden. An den Federeinrichtungen sind beidendseitig Endschuhe angeordnet, welche die Federeinrichtung gegen die jeweiligen Mitnehmer abstützen. Ausführungsvarianten ohne endseitige Endschuhe sind ebenfalls bekannt.

Die zwischen den einzelnen Federelementen angeordneten Gleitschuhe sind an ihrer der Rotationsachse des Torsionsschwingungsdämpfers radial abgewandten Seite mit einer Gleitfläche versehen, die zur Abstützung der Federeinrichtung gegenüber der umgebenden Wandung des Torsionsschwingungsdämpfers dient. Im Betriebszustand des Torsionsschwingungsdämpfers rotieren die Federeinrichtungen, Primärelement und Sekundärelement sowie die jeweils zugehörigen Mitnehmer um eine gemeinsame Achse. Die dabei auftretenden Fliehkräfte üben auf die Gleitschuhe sowie die Federelemente der Federeinrichtungen eine radial nach außen gerichtete, drehzahlabhängige Kraft aus, welche die Gleitflächen der Gleitschuhe mit zunehmender Drehzahl stärker gegen die die Federeinrichtungen umgebende Abstützfläche des Torsionsschwingungsdämpfers, z. B. eine Gehäusewandung, presst. Infolgedessen stellen sich mit steigender Drehzahl zunehmende Reibungskräfte zwischen den Gleitflächen der Gleitschuhe und der Abstützfläche ein, welche der Bewegung der Federeinrichtung entgegengesetzt gerichtet sind.

Für manche Anwendungsfälle ist es günstig, wenn diese durch die Gleit- und Endschuhe verursachten Reibungskräfte eliminiert oder zumindest reduziert sind. Aus der US 4,585,427 oder der US 4,279,132 ist der Einsatz von sogenannten Dividerblechen anstelle der obigen Gleitschuhe bekannt. Derartige Dividerbleche sind üblicherweise als Ringelemente und daran befestigte Trennelemente ausgebildet, wobei diese Trennelemente anstelle von Gleitschuhen zwischen den Federelementen der Federeinrichtungen angeordnet sind. Zudem sind die Trennelemente am Ringelement des Dividerblechs so angeordnet, dass die im Betrieb des Torsionsschwingungsdämpfers auftretenden und an den jeweiligen Trennelementen angreifenden Zentrifugalkräfte sich in der Summe kompensieren. Darüber hinaus sind die Trennelemente derart dimensioniert, dass sie im Betriebszustand nicht mit anderen Bestandteilen des Torsionsschwingungsdämpfers in reibschlüssigen Kontakt treten. Infolgedessen lässt sich durch die Verwendung von Dividerblechen die oben beschriebene Beeinträchtigung der Dämpferkennlinie durch Reibungskräfte verhindern.

Federeinrichtungen mit einer Kombination aus Gleitschuhen und Dividerblechen sind z.B. aus der US 6,047,804 oder aus der europäischen Patentanmeldung mit der Anmeldenummer 04008489.9-1264 bekannt.

Bei allen vorstehend beschriebenen Ausführungsvarianten eines Torsionsschwingungsdämpfers ist grundsätzlich eine Drehmomentübertragung von dem jeweiligen mit dem Antrieb verbundenen Primärelement zum abtriebsseitigen Sekundärelement und umgekehrt möglich.

Erfolgt in einem Torsionsschwingungsdämpfer eine Drehmomentübertragung vom mit dem Antrieb verbundenen Primärelement zum abtriebsseitigen Sekundärelement, so wird diese Drehmomentübertragung als Zug bezeichnet. Eine Drehmomentübertragung in die entgegengesetzte Richtung vom Sekundärelement auf das Primärelement wird Schub genannt.

Beim Übergang von einer Belastungsrichtung auf die entgegengesetzte (z.B. von Zug auf Schub; Leerlauf) können durch nicht ausreichende Schwingungsisolation Geräusche auftreten, die zumindest teilweise in der Ansteuerung der Federeinrichtung unter Drehzahl begründet sind.

Aus der DE 102 09 409 A1 oder der DE 199 09 044 A1 ist es bekannt, dass eine weichere Federrate in den beschriebenen Lastfällen besser isolierend wirkt. Dennoch hat es sich gezeigt, dass auch der Einsatz von Federn unterschiedlicher Federraten bei einem Zug-Schub-Wechsel, insbesondere wenn er aus Volllast bei hoher Drehzahl erfolgt, nicht zu einer hinreichenden Geräuschreduktion führt.

Ausgegangen wird nachfolgend ganz allgemein von einem Torsionsschwingungsdämpfer der z.B. in der DE 102 09 409 A1 oder der DE 199 09 044 A1 beschriebenen Art mit einem motorseitigen Primärelement und mit einem getriebeseitigen Sekundärelement, welche federelastisch gekoppelt sind. Das motorseitige Primärelement ist mit wenigstens einem Primäransteuerelement ausgestattet. Üblicherweise sind in gegenüberliegender Anordnung zwei Primäransteuerelemente vorhanden. Das getriebeseitige Sekundärelement ist mit einer gleichen Anzahl an Sekundäransteuerelementen ausgestattet, welche in zu den Primäransteuerelementen korrespondierender Weise angeordnet sind. Ferner ist mindestens einer Federeinrichtung zur federelastischen Kopplung von Primärelement und Sekundärelement vorgesehen. Die Federeinrichtung weist wenigstens ein Hauptfederelement sowie wenigstens ein parallel zu dem Hauptfederelement geschaltetes Unterfederelement auf. Das Hauptfederelement ist zu einem einendseitigen Abstützen an einem der Primäransteuerelemente und an einem der Sekundäransteuerelemente vorgesehen. In welcher Weise die federelastische Kopplung konkret ausgestaltet ist, ob mit sich an einer Außenfläche abstützenden Gleit- und ggf. Endschuhen, mit Dividerblechen oder als Mischsystem, wie z.B. aus der US 6,047,804 oder aus der europäischen Patentanmeldung mit der Anmeldenummer 04008489.9-1264 bekannt ist, ist unerheblich.

Die Aufgabe der Erfindung besteht nunmehr darin, einen Torsionsschwingungsdämpfer der gattungsgemäßen Art derart weiterzubilden, dass auch bei einem Zug-Schub-Wechsel, insbesondere wenn er aus Volllast bei hoher Drehzahl erfolgt, eine gegenüber den Torsionsschwingungsdämpfern der oben beschriebenen Art verbesserte Schwingungsreduktion erfolgt.

Diese Aufgabe wird bei einem Torsionsschwingungsdämpfer der gattungsgemäßen Art durch die Merkmale des kennzeichnenden Teils des Patentanspruchs 1 erfindungsgemäß gelöst.

Vorteilhafte Ausführungen und Weiterbildungen der Erfindung sind in den Unteransprüchen angegeben.

Bei dem gattungsgemäßen Torsionsschwingungsdämpfer ist erfindungsgemäß das Unterfederelement derart angeordnet, dass sich dieses in einem Zugbetrieb und/oder in einem Schubbetrieb und/oder bei einem Lastwechsel nicht gegen das Sekundäransteuerelement abstützen kann. Auch bei komprimiertem Hauptfederelement ist das Unterfederelement unbelastet, d.h. es hat noch seinen vollen Federweg/seine volle Kennlinie zur Verfügung und kann somit nicht im komprimierten Zustand durch Fliehkraftreibung ausgeschaltet sein. Damit wird erreicht, dass -sogar im Zug-Schub-Wechsel aus Volllast bei hoher Drehzahl, welcher den schlechtesten Betriebszustand für den Dämpfer darstellt- das motorseitige Primäransteuerelement mit seinen speziell auf die das Unterfederelement abgestimmten Ansteuer-Geometrien auf ein entlastetes Unterfederelement trifft und dieses bis zu einem definierten Moment mit ihrer Federrate wirksam wird. Die Federrate des Unterfederelements ist dabei vorzugsweise geringer (vgl. obige Ausführungen zum Stand der Technik) als die des Hauptfederelements.

Bei dieser erfindungsgemäßen Ausgestaltung muss also kein Vorspannmoment überwunden werden. Das definierte Moment muss vorzugsweise so hoch sein, dass das Auftreffen des motorseitigen Primäransteuerelements auf die vorzugsweise erheblich steiferen restlichen Federelemente, insbesondere Hauptfederelemente, -entstanden durch das Abschalten von Federelementen bzw. Teilen der Federelemente unter Drehzahl- nicht mehr stattfindet und/oder zumindest keine wahrnehmbaren Geräusche mehr verursacht.

In einer bevorzugten Ausführungsvariante ist eine Halteeinrichtung vorgesehen, welche das Unterfederelement derart hält, dass sich das Sekundärelement, insbesondere in Momentenflußrichtung, nicht in der vorstehend beschriebenen Weise abstützen kann. Obwohl sich als Haupt- und Unterfederelemente grundsätzlich jegliche Art elastischer Elemente eignet, welche z.B. unter Druck komprimiert und/oder unter Zug expandiert werden können, wird es im allgemeinen günstig sein, wenn das Hauptfederelement eine Schraubenfeder ist und/oder wenn das Unterfederelement eine Schraubenfeder ist. Schraubenfedern werden ganz allgemein in der Regel zur federelastischen Kopplung von Torsionsschwingungsdämpfern eingesetzt.

In einer besonders vorteilhaften Ausgestaltung der Erfindung, insbesondere wenn die Federrate des Unterfederelements geringer als die des Hauptfederelements gewählt ist, ist vorgesehen, dass das Hauptfederelement eine (schraubenförmige) Außenfeder ist und dass das Unterfederelement eine innerhalb der Außenfeder angeordnete (ebenfalls schraubenförmige) Innenfeder ist. Federelastische Kopplungen von Torsionsschwingungsdämpfern mit ineinanderliegenden Schraubenfedern sind bekannt, so dass eine Halteeinrichtung der erfindungsgemäßen Art vergleichsweise leicht konstruiert werden kann.

Eine erfindungsgemäße Halteeinrichtung in vergleichsweise einfacher und damit kostengünstig herstellbarer Bauart umfasst einen, vorzugsweise zylindrischen oder kegelförmigen, Napf, welcher sich innerhalb der Außenfeder fixiert und welcher die Innenfeder aufnimmt.

Der Napf kann einendseitig einen umlaufenden, z.B. radial nach außen ragenden, Kragen aufweisen, welcher sich an einem Ende der Außenfeder abstützt. Der Napf, insbesondere der Kragen, kann ferner eine Auflagefläche für das Primäransteuerelement und/oder für das Sekundäransteuerelement aufweisen.

Die Halteeinrichtung, insbesondere der Napf, kann zusätzlich auch die Funktion sogenannter Blockstifte übernehmen, wie sie z.B. in der EP 1 496 289 A1 beschrieben sind. Die Halteeinrichtung, insbesondere der Napf, kann also erfindungsgemäß derart ausgebildet sein, dass sie ein auf Block gehen des Hauptfederelements, insbesondere der Außenfeder, und/oder des Unterfederelements, insbesondere der Innenfeder, verhindert.

Bei einem Napf der vorstehend beschriebenen Art kann diese Funktionalität z.B. dadurch erreicht werden, dass die Länge des Napfs in entsprechender Weise gewählt wird.

Um eine effektive Geräuschreduktionswirkung des Torsionsschwingungsdämpfers z.B. bei Lastumkehr zu gewährleisten, ist es -entsprechend obiger Beschreibung- günstig, wenn die Ansteuerung des Unterfederelements, insbesondere der Innenfeder durch das Primärsteuerelement (das Sekundärsteuerelement hat vorzugsweise in keinem Betriebszustand Kontakt zum Unterfederelement, insbesondere zur Innenfeder), vor dem Auftreffen auf das Hauptfederelement, insbesondere die Außenfeder, beginnt. Hierfür kommen verschiedene Lösungen in Betracht.

Z.B. kann das Unterfederelement, insbesondere die Innenfeder, das Hauptfederelement, insbesondere die Außenfeder, zur Herstellung eines, vorzugsweise flächigen, Kontakts zwischen dem Unterfederelement, insbesondere der Innenfeder, und dem Primäransteuerelement einendseitig überragen.

Alternativ oder zusätzlich kann das Primäransteuerelement zur Herstellung eines, vorzugsweise flächigen, Kontakts zwischen dem Unterfederelement, insbesondere der Innenfeder, und dem Primäransteuerelement einen Vorsprung aufweisen.

Eine weitere Alternativ- oder Zusatzvariante besteht darin, dass zur Herstellung eines, vorzugsweise flächigen, Kontakts zwischen dem Unterfederelement, insbesondere der Innenfeder, und dem Primäransteuerelement ein Zwischenelement vorgesehen ist, welches einendseitig auf das Unterfederelement, insbesondere die Innenfeder aufgesetzt ist oder welches auf das Primäransteuerelement aufgesetzt ist.

In allen Ausführungsvarianten stützt sich das motorseitige Primäransteuerelement beim Erreichen des Enddrehmoments des Unterfederelements, insbesondere der Innenfeder, wieder auf den vorgespannten bzw. abgeschalteten übrigen Federelementen der Anordnung ab und spannt diese weiter vor bzw. verschiebt diese im dafür vorgesehenen Einbauraum.

In einer besonders vorteilhaften Ausführungsvariante der Erfindung ist eine Führungseinrichtung vorgesehen, um das Zwischenelement am Innendurchmesser der Innenfeder und/oder am Innendurchmesser des Napfs zu führen. In ähnlicher Weise kann alternativ oder zusätzlich eine Führungsvorrichtung vorgesehen sein, um das Primäransteuerelement am Innendurchmesser der Innenfeder und/oder am Innendurchmesser des Napfs zu führen. Alle diese Maßnahmen verhindern, dass es zu einer unkontrollierten und ggf. ungewünschten Komprimierung der Innenfeder z.B. durch einen ungewünschten Versatz oder ein Verkippen kommt.

Um das Zwischenelement in einer definierten Lage zu halten, ist erfindungsgemäß in weiterer Ausgestaltung der Erfindung vorgesehen, dass die Halteeinrichtung, insbesondere der Napf, eine Haltevorrichtung für das Zwischenelement aufweist oder dass das Primäransteuerelement eine Haltevorrichtung für das Zwischenelement aufweist.

Je nachdem, welche Funktionalität das Zwischenelement erfüllen muss und je nachdem welche Abmessungen für die Innenfeder und/oder das Primäransteuerelement, insbesondere dessen Vorsprung, gewählt sind, schließt das Zwischenelement wahlweise längenbündig mit dem Napf ab oder es steht vor oder zurück.

Um zu verhindern, dass die Innenfeder unbeabsichtigt aus dem Napf fällt, kann der Napf eine Innenfederhaltevorrichtung zum Halten der Innenfeder aufweisen.
So kann z.B. der Napf einen die Innenfederhaltevorrichtung bildenden nach radial innen weisenden Kragen umfassen, an dem sich die Innenfeder endseitig abstützt.

Alternativ oder zusätzlich kann der Napf auch einen sich einendseitig verjüngenden die Innenfederhaltevorrichtung bildenden Kegel bzw. Kegelstumpf aufweisen.

Als Alternative zu einer in Form eines Napfes ausgebildeten Halteeinrichtung, kann die Halteeinrichtung auch Bestandteil eines Gleitschuhs oder eines Trennelements eines Dividerblechs sein, soweit es die entsprechende Funktionalität erfüllt. Alternativ oder zusätzlich kann die Halteeinrichtung auch Bestandteil der Innenfeder und/oder der Außenfeder sein.

Eine Halteeinrichtung als Bestandteil der Innenfeder kann darin bestehen, dass diese Innenfeder wenigstens eine in die Außenfeder eingreifende Federwindung aufweist, so dass eine Haltewirkung eintritt. In entsprechender Weise kann eine Halteeinrichtung als Bestandteil der Außenfeder, eine in die Innenfeder eingreifende Federwindung sein.

Unterfederelement und Primäransteuerelement sind vorzugsweise auch bei den nunmehr vorgestellten Alternativvarianten für eine Halteeinrichtung funktional aufeinander abzustimmen.

So besteht eine Ausführungsvariante der Erfindung darin, dass das Unterfederelement, insbesondere die Innenfeder, das Hauptfederelement, insbesondere die Außenfeder, zur Herstellung eines, vorzugsweise flächigen, Kontakts zwischen dem Unterfederelement, insbesondere der Innenfeder, und dem Primäransteuerelement einendseitig überragt. Zusätzlich oder alternativ kann das Primäransteuerelement zur Herstellung eines, vorzugsweise flächigen, Kontakts zwischen dem Unterfederelement, insbesondere der Innenfeder, und dem Primäransteuerelement einen Vorsprung aufweisen. Eine Weiterbildung der vorstehenden Varianten oder eine Alternativvariante besteht wiederum darin, dass zur Herstellung eines, vorzugsweise flächigen, Kontakts zwischen dem Unterfederelement, insbesondere der Innenfeder, und dem Primäransteuerelement ein Zwischenelement vorgesehen ist, welches einendseitig auf das Unterfederelement, insbesondere die Innenfeder aufgesetzt ist oder welches auf das Primäransteuerelement aufgesetzt ist.

Selbstverständlich kann auch hier eine Führungseinrichtung vorgesehen sein, um das Zwischenelement am Innendurchmesser der Innenfeder zu führen und/oder um das Primäransteuerelement am Innendurchmesser der Innenfeder zu führen.

Die Erfindung wird nunmehr anhand der Zeichnungen näher beschrieben. Gleiche oder funktionsgleiche Bestandteile sind in allen Figuren mit gleichen Bezugszeichen versehen. Es zeigen:
- Figur 1:: eine Detailquerschnittsansicht eines erfindungsgemäßen Torsionsschwingungsdämpfers mit einer ersten Ausführungsvariante einer Halteeinrichtung
- Figur 2:: eine Detailquerschnittsansicht eines erfindungsgemäßen Torsionsschwingungsdämpfers mit einer zweiten Ausführungsvariante einer Halteeinrichtung
- Figur 3:: eine Detailquerschnittsansicht eines erfindungsgemäßen Torsionsschwingungsdämpfers mit einer dritten Ausführungsvariante einer Halteeinrichtung
- Figur 4:: eine Detailquerschnittsansicht eines erfindungsgemäßen Torsionsschwingungsdämpfers mit einer vierten Ausführungsvariante einer Halteeinrichtung
- Figur 5:: eine Detailquerschnittsansicht eines erfindungsgemäßen Torsionsschwingungsdämpfers mit einer fünften Ausführungsvariante einer Halteeinrichtung
- Figur 6:: eine Detailquerschnittsansicht eines erfindungsgemäβen Torsionsschwingungsdämpfers mit einer sechsten Ausführungsvariante einer Halteeinrichtung
- Figur 7:: eine Detailquerschnittsansicht eines erfindungsgemäβen Torsionsschwingungsdämpfers mit einer siebenten Ausführungsvariante einer Halteeinrichtung
- Figur 8:: eine Detailquerschnittsansicht eines erfindungsgemäßen Torsionsschwingungsdämpfers mit einer achten Ausführungsvariante einer Halteeinrichtung
- Figur 9:: eine Detailquerschnittsansicht eines erfindungsgemäßen Torsionsschwingungsdämpfers mit einer neunten Ausführungsvariante einer Halteeinrichtung
- Figur 10:: eine Detailquerschnittsansicht eines erfindungsgemäβen Torsionsschwingungsdämpfers mit einer zehnten Ausführungsvariante einer Halteeinrichtung
- Figur 11:: eine Detailquerschnittsansicht eines erfindungsgemäßen Torsionsschwingungsdämpfers mit einer elften Ausführungsvariante einer Halteeinrichtung
- Figur 12:: eine Detailquerschnittsansicht eines erfindungsgemäßen Torsionsschwingungsdämpfers mit einer zwölften Ausführungsvariante einer Halteeinrichtung
- Figur 13:: eine Detailquerschnittsansicht eines erfindungsgemäßen Torsionsschwingungsdämpfers mit einer dreizehnten Ausführungsvariante einer Halteeinrichtung
- Figur 14:: eine Detailquerschnittsansicht eines erfindungsgemäßen Torsionsschwingungsdämpfers mit einer vierzehnten Ausführungsvariante einer Halteeinrichtung
- Figur 15:: eine Detailquerschnittsansicht eines erfindungsgemäßen Torsionsschwingungsdämpfers mit einer fünfzehnten Ausführungsvariante einer Halteeinrichtung
- Figur 16:: eine Detailquerschnittsansicht eines erfindungsgemäßen Torsionsschwingungsdämpfers mit einer sechzehnten Ausführungsvariante einer Halteeinrichtung
- Figur 17:: eine Detailquerschnittsansicht eines erfindungsgemäβen Torsionsschwingungsdämpfers mit einer siebzehnten Ausführungsvariante einer Halteeinrichtung
- Figur 18:: eine Detailquerschnittsansicht eines erfindungsgemäβen Torsionsschwingungsdämpfers mit einer achtzehnten Ausführungsvariante einer Halteeinrichtung
- Figur 19:: eine Detailquerschnittsansicht eines erfindungsgemäßen Torsionsschwingungsdämpfers mit einer neunzehnten Ausführungsvariante einer Halteeinrichtung
- Figur 20:: eine Detailquerschnittsansicht eines erfindungsgemäßen Torsionsschwingungsdämpfers mit einer zwanzigsten Ausführungsvariante einer Halteeinrichtung
- Figur 21:: eine Explosionsdarstellung eines erfindungsgemäßen Torsionsschwingungsdämpfers.

Beispielhaft wird die Erfindung nunmehr anhand eines Torsionsschwingungsdämpfers in kombinierter Gleitschuh/Dividerblechanordnung beschrieben. Es versteht sich für den Fachmann von selbst, dass auch ein Torsionsschwingungsdämpfer in Gleitschuhanordnung, in Dividerblechanordnung oder in einer Anordnung ganz ohne Gleitschuhe oder Dividerbleche, wie z.B. in der DE 199 09 044 A1 beschrieben ist, in erfindungsgemäßer Weise ausgestattet sein kann.

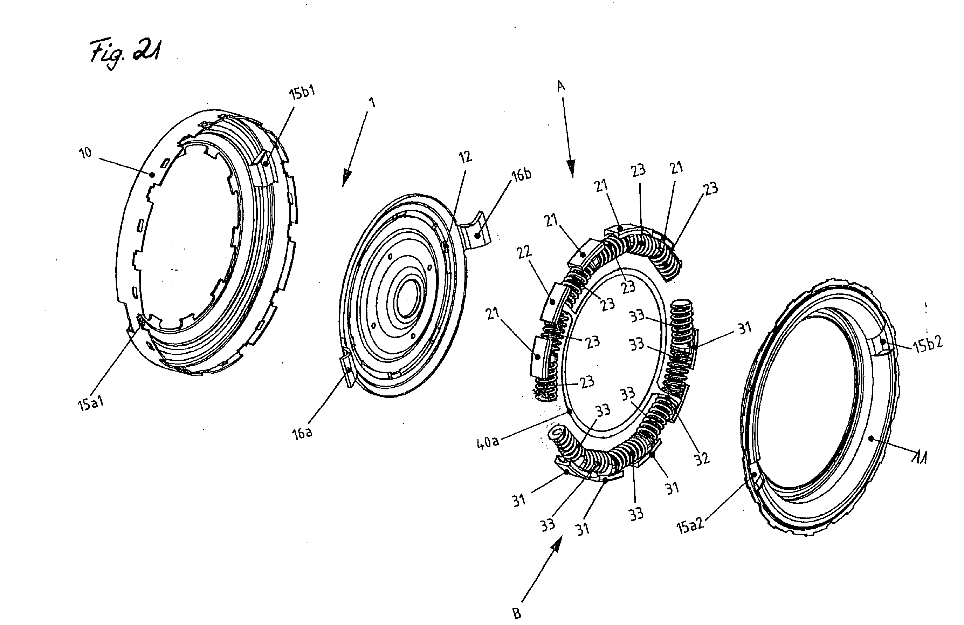

Das Ausführungsbeispiel in Fig. 21 zeigt in Explosionsdarstellung einen derartigen erfindungsgemäß ausgestalteten Torsionsschwingungsdämpfer 1. Der Torsionsschwingungsdämpfer 1 umfasst ein motorseitiges Primärelement in Form einer Mittelscheibe 12 und ein getriebeseitiges Sekundärelement bestehend aus einer vorderen Seitenscheibe 11 und einer hinteren Seitenscheibe 10.

Das Primärelement in Form der Mittelscheibe 12 weist zwei Mitnehmer, die Primäransteuerelemente 16a und 16b auf, welche am Außenumfang der Mittelscheibe 12 angeordnet sind. An den beiden das Sekundärelement bildenden Seitenscheiben 10, 11, sind ebenfalls zwei Mitnehmer, welche vorstehend als Sekundäransteuerelemente bezeichnet sind, angebracht. Wie das Sekundärelement selbst setzen sich diese Mitnehmer des Sekundärelements jeweils aus zwei Teilen zusammen. So gibt es für jedes Sekundäransteuerelement ein Vorderteil 15a1 und 15b1 sowie ein Hinterteil 15a2 und 15b2. Diese sind jeweils an der vorderen Seitenscheibe 11 oder der hinteren Seitenscheibe 10 befestigt bzw. mit diesen (ggf. einstückig) verbunden.

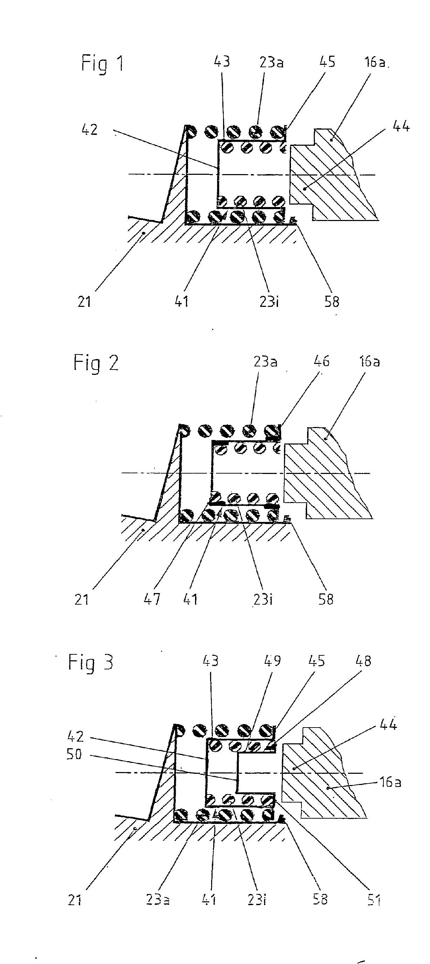

Der Torsionsschwingungsdämpfer in Fig. 1 umfasst zwei Federeinrichtungen A und B. Die Federeinrichtung A besteht aus den Federelementen 23 und den Gleitschuhen 21. Die Gleitschuhe 21 sind zwischen den einzelnen Federelementen 23 der Federeinrichtung A angeordnet. An einer Stelle ist anstatt eines Gleitschuhs ein Trennelement 22 angeordnet, welches starr mit einem Ringelement 40a verbunden ist.

Dementsprechend besteht die Federeinrichtung B aus den Federelementen 33, den Gleitschuhen 31 und dem Trennelement 32, welches diametral gegenüberliegend zum Trennelement 22 angeordnet ist. Das Trennelement 32 steht ebenso wie das Trennelement 22 in starrer Verbindung mit dem Ringelement 40a.
Für die Erfindung maßgeblich sind nunmehr allein die unmittelbar an die jeweiligen Primär- und Sekundäransteuerelemente 15a1, 15b1, 15a2, 15b2, 16a, 16b anschließenden Federelemente 23, 33.

Die Figuren 1 bis 16 zeigen daher den Torsionsschwingungsdämpfer 1 im Bereich eines dieser Federelemente, nämlich im Bereich des Federelements 23. Allen Detailansichten entnimmt man gemeinsam den Gleitschuh 21, das Primäransteuerelement 16a sowie das Federelement 23, welches eine Außenfeder 23a und eine parallel geschaltete Innenfeder 23i umfasst.

Beim Ausführungsbeispiel gemäß der Figur 1 ist die Außenfeder 23a in an sich üblicher Weise in den Gleitschuh 21 aufgenommen. Ein Bügel 58 hält die Außenfeder 23a innerhalb der Aufnahme des Gleitschuhs 23a und verhindert ein Herausfallen.

In die schraubenförmige Außenfeder 23a ist ein Napf 41 mit zylindrischer Wandung 43 im wesentlichen formschlüssig, jedoch eine axiale Relativbewegung zulassend, eingesetzt. In den Napf 41 ist eine Innenfeder 23i ebenfalls im wesentlichen formschlüssig, jedoch auch eine axiale Relativbewegung zulassend, eingesetzt. Die Innenfeder 23i stützt sich am Boden 42 des Napfs 41 einendseitig ab. Andersendseitig schließt die Innenfeder 23i im wesentlichen formschlüssig mit der diese umgebenden Außenfeder 23a ab. Die Innenfeder 23i überragt also die Außenfeder 23a an dem dem Primäransteuerelement 16a zugewandten Ende nicht. Ebenso überragt auch die Außenfeder 23a die Innenfeder 23i in diesem Ausführungsbeispiel nicht. Eine vorstehende Anordnung der Innenfeder 23i gegenüber der Außenfeder 23a bzw. eine zurückstehende Anordnung der Innenfeder 23i gegenüber der Außenfeder 23a wären jedoch grundsätzlich möglich, sofern verhindert wird, dass eine ungewünschte Kontaktierung mit dem Sekundäransteuerelement erfolgt.

Der Napf 41 weist einendseitig einen radial nach außen stehenden Kragen 45 auf, welcher die Außenfeder 23a einendseitig übergreift, und mit welchem der Napf 41 mit Hilfe des Bügels 58 oder im Falle eines Kontakts mit dem Sekundäransteuerelement von diesem gehalten wird.

Um zu erreichen, dass das Primäransteuerelement 16a die Innenfeder 23i mit im vorliegenden Fall weicher Federrate vor der Außenfeder 23a mit im vorliegenden Fall harter Federrate berührt, weist das Primärelement 16a einen Vorsprung 44 auf, welcher eine radiale Erstreckung aufweist, die im wesentlichen dem Außendurchmesser der Innenfeder 23i entspricht oder geringfügig kleiner ist.

Es versteht sich für den Fachmann von selbst, dass grundsätzlich auch eine funktionelle Vertauschung von Innenfeder 23i und Außenfeder 23a in Betracht kommt. Dann könnte der Vorsprung 44 z.B. zweigeteilt ausgeführt werden, um einen Kontakt zwischen der Außenfeder 23a und dem Primäransteuerelement 16a zu gewährleisten, ohne dass bereits ein Kontakt mit der Innenfeder 23i stattfindet. Aus mechanischen, insbesondere Stabilitätsgründen wird jedoch in der Regel die in der Figur 1 (und entsprechend den Figuren 2 bis 16) gezeigte(n) Lösung(en) zu bevorzugen sein.

Wesentlich bei der Erfindung ist es, dass die zusätzliche Feder (hier in den Figuren 1 bis 16 also die Innenfeder 23i) so in die Hauptfeder (also die Außenfeder 23a) eingelegt ist, dass sie zu den Ansteuerungselementen der Getriebeseite (hier aufgrund ihres Durchmessers und ihrer angepassten Länge) keinen Kontakt haben kann. Auch bei einer komprimierten Hauptfeder (hier die Außenfeder 23a) ist die Zusatzfeder (hier entsprechend die Innenfeder 23i) unbelastet., d.h. sie hat noch ihren vollen Federweg/ihre volle Kennlinie zur Verfügung und kann somit nicht im komprimierten Zustand durch Fliehkraftreibung abgeschaltet sein.

Das Ausführungsbeispiel nach der Figur 2 unterscheidet sich von dem der Figur 1 lediglich dadurch, dass der Boden 47 und der Kragen 46 des Napfs 41 nicht einteilig mit der zylindrischen Wandung 43 ausgebildet sind, sondern als separate Teile an der Wandung 43 angebracht sind. Dies kann u.U. aus fertigungstechnischen Gründen sinnvoll sein, weil der Napf 41 dann aus Blechteilen zusammengesetzt werden kann, welche sich vergleichsweise leicht in die gewünschte Form bringen lassen. Die letzte Windung rechts der Außenfeder 23a ist dabei auf einem größeren Radius des Napfs 41 aufgesetzt als die übrigen Windungen. Entsprechend ist die erste linke Windung der Innenfeder 23i auf kleinerem Radius des Napfs 41 in diesen eingesetzt. Hierdurch werden die Außenfeder 23a und die Innenfeder 23i einendseitig fixiert, behalten jedoch im übrigen ihre volle Elastizität.

Selbstverständlich ist es zur axial einendseitigen Fixierung nicht erforderlich, dass der Napf 41 mehrteilig ausgeführt ist. Vielmehr könnte er auch einstückig mit entsprechenden Verdickungen gefertigt sein.

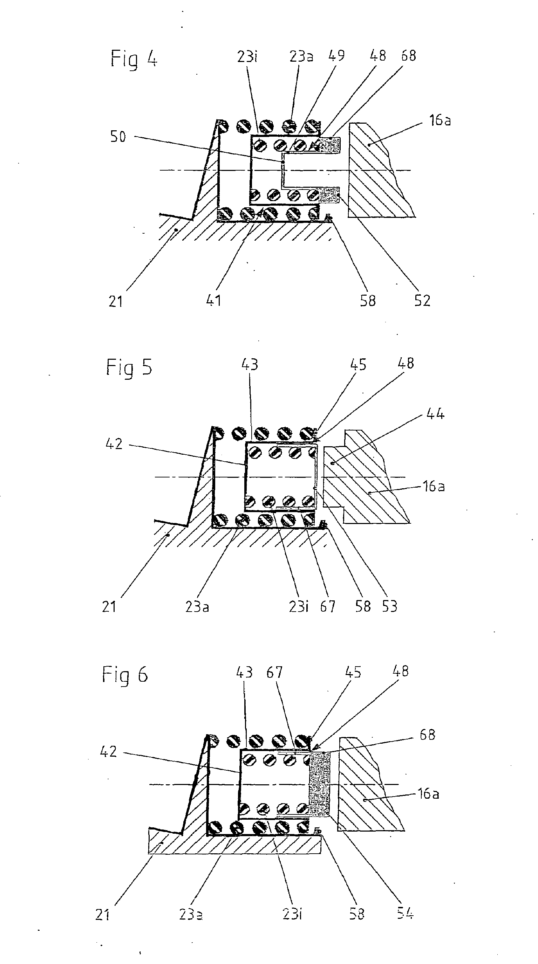

Die in der Figur 3 gezeigte Halteeinrichtung für die Innenfeder 23i ist weitgehend identisch ausgeführt wie die Halteeinrichtung mit Napf 41 nach der Figur 1. Zusätzlich ist bei diesem Ausführungsbeispiel ein Zwischenelement 48 ebenfalls in der Art eines Napfs in die Innenfeder 23i eingesetzt.

Das Zwischenelement bzw. der Napf 48 weist ähnlich dem Napf 41 für die Innenfeder 23i eine zylindrische Wandung 49 auf, welche einendseitig durch einen Boden 50 verschlossen ist und an welcher andersendseitig ein radial nach außen verlaufender Kragen 51 angeformt ist. Die Wandung 49 schließt formschlüssig, aber eine axiale Bewegung der Innenfeder 23i zulassend, an den Innenumfang der Innenfeder 23i an. Der Kragen 51 sitzt einendseitig auf der äußersten Windung der Schrauben-/Innenfeder 23i auf und ist ggf. mit dieser in Halteverbindung. Dieser Kragen 51 stellt die Kontaktfläche zum Vorsprung 44 am Primäransteuerelement bereit. Der Boden 50 verleiht dem Zwischenelement 48 eine gewisse Stabilität, er ist jedoch unter Umständen entbehrlich.

Der die Kontaktfläche zum Vorsprung des Primäransteuerelements 16a herstellende Kragen 51 schließt bei dem Ausführungsbeispiel gemäß der Figur 3 im wesentlichen bündig mit dem einen Ende der Außenfeder 23a bzw. dem Kragen 45 des die Halteeinrichtung darstellenden Napfs 41 ab. Dieser Kragen 51 kann jedoch gegenüber der Außenfeder 23a bzw. dem Kragen 45 des die Halteeinrichtung darstellenden Napfs 41 auch zurück- oder vorstehen. Je nach Ausführung des Zwischenelements 48 ist der einen Kontakt zur Innenfeder 23i herstellende Bereich des Primäransteuerelements 16a anders ausgestaltet bzw. auszugestalten, um die oben beschriebene Funktionalität zu erzielen.

Figur 4 zeigt ein Ausführungsbeispiel, bei dem der Kragen 52 breiter ausgeführt ist und somit über den Kragen 45 des Napfs 41 übersteht. Der Vorsprung 44 des Primäransteuerelements 16a wird dadurch entbehrlich - wie in der Figur 4 explizit dargestellt ist - oder kann geringere axiale Abmessungen aufweisen (nicht dargestellt).

Weil der Kragen 52 eine gewisse axiale Erstreckung aufweist, dient dessen zylindrische Außenwandung 68 im vorliegenden Ausführungsbeispiel als Führungseinrichtung für das Zwischenelement 48 an der Innenwandung des im maßgeblichen Bereich ebenfalls zylinderförmigen Napfs 41.

Figur 5 zeigt ein weiteres Ausführungsbeispiel basierend auf einer Haltevorrichtung entsprechend der Figur 1. Bei dem in Figur 5 dargestellten Ausführungsbeispiel ist ebenfalls ein Zwischenelement 48 in der Art eines Topfes oder Napfs vorgesehen. Anders als bei den Zwischenelementen 48 nach den Figuren 3 und 4 ist der Napf/Topf gerade umgekehrt auf die Innenfeder 23i aufgesetzt:

Der Boden 53 des Napfs/Topfs 48 sitzt am offenen Ende der Innenfeder 23i auf, die zylindrische Wandung 67 des Napfs/Topfs 48 stößt außenumfangsseitig an die Innenwandung des Napfs 41 und innenumfangsseitig an den Außenumfang der Innenfeder 23i an.

Die Außenwandung 67 des Napfs/Topfs 48 dient als Führung für das Zwischenelement 48 an der Innenwandung 43 des Napfs 41. Die Innenwandung des Zwischenelements 48 dient als Führung für die Innenfeder 23i.

Der Boden 53 des Zwischenelements 48 schließt bei diesem Ausführungsbeispiel bündig mit dem einen Ende der Außenfeder 23a bzw. mit dem Kragen 45 des Napfs 41 ab. Daher weist das Primäransteuerelement 16a hier wie z.B. beim Ausführungsbeispiel nach der Figur 3 einen Vorsprung 44 auf.

Selbstverständlich kann der Boden auch gegenüber dem einen Ende der Außenfeder 23a zurückversetzt sein oder der Boden 54 kann, wie sich z.B. aus dem Ausführungsbeispiel nach der Figur 6 ergibt, gegenüber dem Ende der Außenfeder 23a vorstehen. Die zylindrische Wandung 68 dient in allen drei Fällen als Führungsfläche für das Zwischenelement 48 an der Innenwandung 43 des Napfs 41.

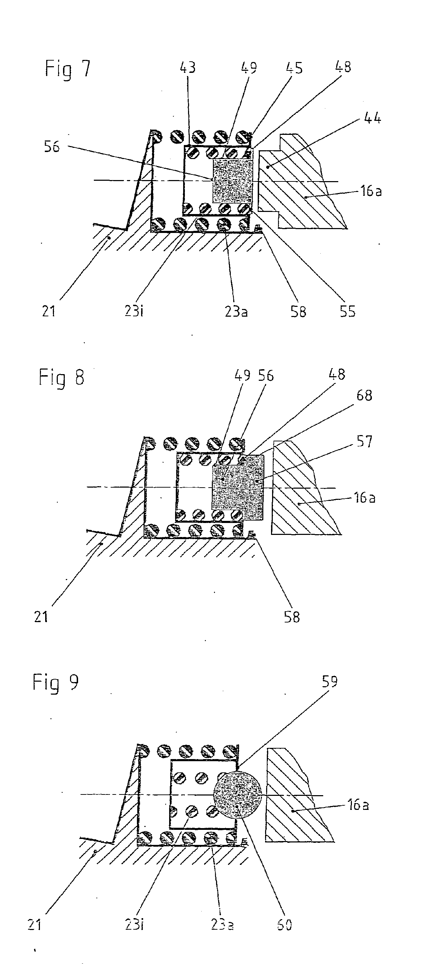

Die Figur 7 zeigt ein weiteres Ausführungsbeispiel. Halteeinrichtung 41, Zwischenelement 48 und Primäransteuerelement 16a sind hier weitgehend identisch wie beim Ausführungsbeispiel gemäß der Figur 3 ausgeführt. Während beim Ausführungsbeispiel nach der Figur 3 das Zwischenelement 48 als Hohlkörper ausgeführt ist, ist das Zwischenelement nach der Figur 7 als Vollkörper mit zylindrischem Grundkörper 56 und Deckel 55 ausgeführt.

Auch beim Ausführungsbeispiel nach der Figur 8 ist das Zwischenelement 48 als Vollkörper ausgebildet. Es stellt quasi das Analogon zur Ausführungsvariante nach der Figur 4 dar.

Eine konstruktiv geänderte Variante für die Halteeinrichtung 41 und das Zwischenelement 60 entnimmt man der Figur 9. Der Grundkörper der Halteeinrichtung 41 nach der Figur 9 stellt einen Napf dar. Am offenen Ende des Napfs 41 befindet sich ein radial nach innen weisender Kragen 59. Dieser Kragen 59 dient als Axialabstützung für das Zwischenelement 60, welches hier die Form eines Ellipsoids aufweist. Das Zwischenelement 60 dient wiederum zur Axialabstützung der Innenfeder 23i.

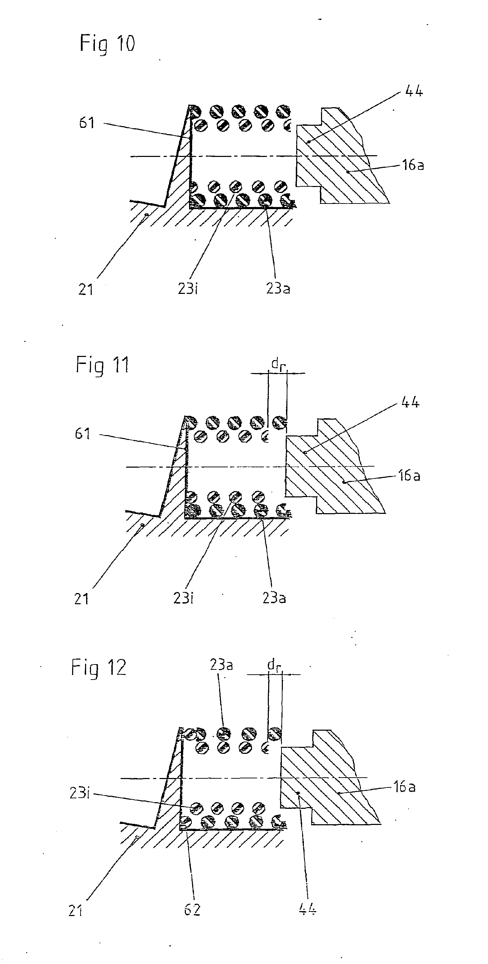

Die Figur 10 zeigt eine Ausführungsvariante, bei der die Au-βenfeder 23a als Halteeinrichtung 61 für die Innenfeder 23i dient. Die Innenfeder 23i ist auf den Gleitschuh 21 lediglich aufgesetzt.

Bei der in der Figur 10 dargestellten Variante schließt die Innenfeder 23i beidendseitig bündig mit der Außenfeder 23a ab. Das Primäransteuerelement 16a weist zur (bei geringer Drehauslenkung) alleinigen Ansteuerung der Innenfeder 23i einen Vorsprung 16a auf, welcher an die Außenmaße der Innenfeder 23i angepasst ist.

Bei der Ausführungsvariante nach der Figur 11 ist (bei sonstiger Übereinstimmung) abweichend von dem Ausführungsbeispiel gemäß der Figur 10 die Innenfeder 23i gegenüber dem offenen Ende der Außenfeder 23a um eine Distanz d_{R} zurückversetzt. Um die oben beschriebene Funktionalität zu gewährleisten, ist die axiale Länge des Vorsprungs 44 des Primäransteuerelements 16a um einen gewissen Betrag größer als die des Vorsprungs 44 des Primäransteuerelements 16a nach der Figur 10.

Bei dem Ausführungsbeispiel nach der Figur 12 besteht die Halteeinrichtung 62 für die Innenfeder 23i in einem partiell größeren Windungsdurchmesser der Innenfeder 23i. Die Windung 62 mit gegenüber den übrigen Windungen der Innenfeder 23i größerem Windungsdurchmesser greift damit in die Windungen der Außenfeder 23a ein, wodurch die Innenfeder 23i innerhalb der Außenfeder 23a im wesentlichen axial unverschieblich gehalten wird.

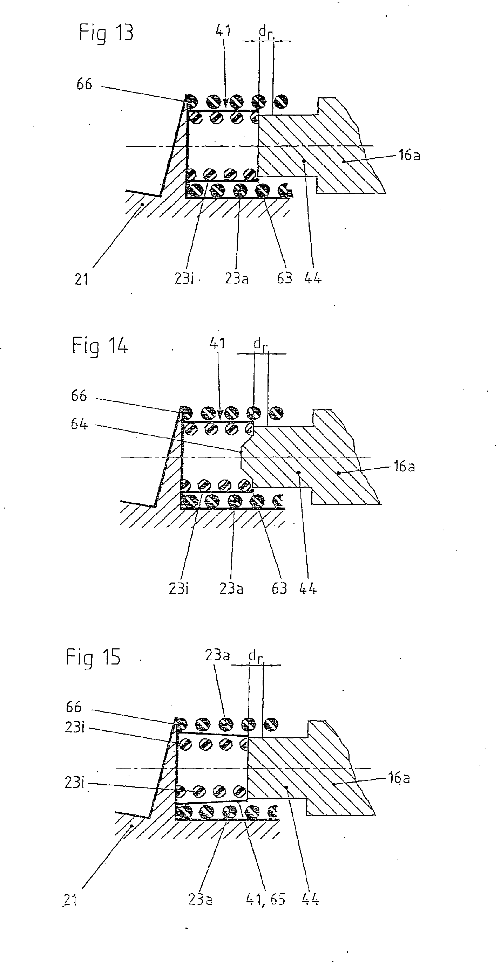

Die Figuren 13 bis 16 zeigen weitere Ausführungsvarianten für Halteeinrichtungen 41 der erfindungsgemäßen Art. Allen Detailansichten entnimmt man gemeinsam den Gleitschuh 21, das Primäransteuerelement 16a sowie das Federelement 23, welches eine Außenfeder 23a und eine parallel geschaltete Innenfeder 23i umfasst.

Diese Ausführungsvarianten haben gemein, dass die Außenfeder 23a in an sich üblicher Weise in den Gleitschuh 21 aufgenommen ist. Abweichend von den Ausführungsbeispielen nach den Figuren 1 bis 9 ist bei diesen Ausführungsvarianten kein Bügel 58 vorgesehen, welcher die Außenfeder 23a innerhalb der Aufnahme des Gleitschuhs 23a hält und ein Herausfallen verhindert. (Selbstverständlich könnte grundsätzlich auch ein derartiger Haltebügel vorhanden sein). Vielmehr ist der auch bei diesen Varianten vorgesehene Halte-Napf 41 anders als bei den Ausführungsbeispielen nach den Figuren 1 bis 9 angeordnet und geringfügig modifiziert.

Der Halte-Napf 41 umfasst bei allen diesen Ausführungsvarianten nach den Figuren 13 bis 16 eine hohlzylinderförmige und/oder hohlkegelstumpfförmige Wandung 43, 65 und einen radial nach außen weisenden Kragen 66.

Abweichend von den vorstehend beschriebenen Ausführungsvarianten nach den Figuren 1 bis 9 sitzt der Kragen 66 nicht am freien, den Ansteuerelementen 16a zugeordneten Ende der Außenfeder 23a sondern am rückwärtigen Ende an der Axialabstützung des Gleitschuhs 21 auf. Dadurch wird der Napf 41 durch die Au-βenfeder 23a am rückwärtigen Ende an der Axialabstützung des Gleitschuhs 21 gehalten.

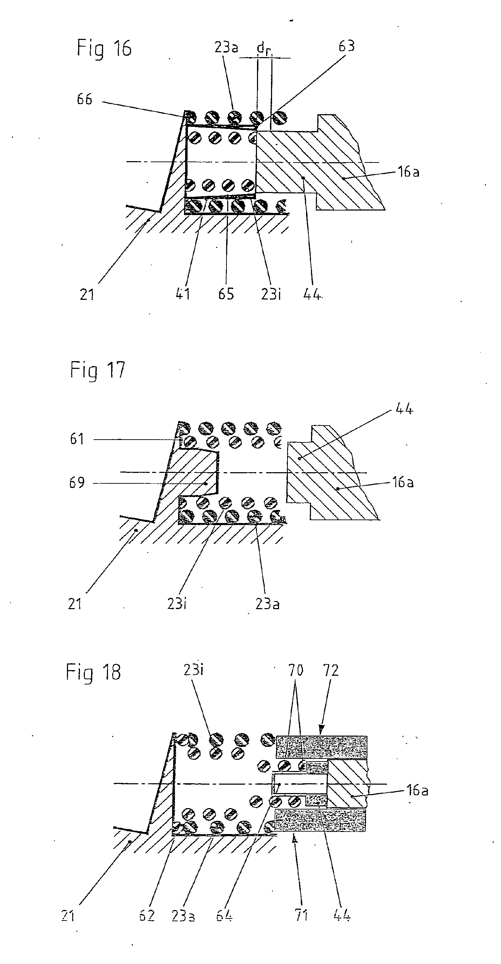

Die dem freien Federende der Innenfeder 23i bzw. der Außenfeder 23a zugewandte Seite des Napfs 41 trägt einen nach radial innen weisenden Kragen 63 (Ausführungsbeispiele nach den Figuren 13, 14 oder 16) und/oder die Wandung 65 verengt sich kegelstumpfförmig (Ausführungsbeispiele nach den Figuren 15 oder 16). Beide Maßnahmen verhindern ein Herausfallen der Innenfeder 23i am freien Ende.

Alle Ausführungsvarianten nach den Figuren 13 bis 16 haben ferner gemein, dass der Napf 41 und somit die Innenfeder 23i um eine Distanz d_{R} gegenüber dem freien Ende der Außenfeder 23a zurück versetzt ist. Die Länge des Vorsprungs 44 des Primärelements 16a ist folglich größer als die der Ausführungsvarianten nach den Figuren 1 bis 3, 5, 7 und 10, bei denen die Innenfeder 23i und die Außenfeder 23a bündig abschließen.

Das Ausführungsbeispiel nach der Figur 14 zeigt darüber hinaus noch eine weitere Besonderheit. Der Vorsprung 44 ist an seinem äußersten Ende konisch verjüngt, so dass er in den Innendruchmesser der Innenfeder 23i führend eingreifen kann. Selbstverständlich könnte auch ein etwaig vorhandenes Zwischenelement, welches zusätzlich oder alternativ zu dem Vorsprung 44 vorhanden sein kann in entsprechender Weise ausgebildet sein.

Die Figur 17 zeigt ein weiteres Ausführungsbeispiel, welches dem nach der Figur 10 weitgehend gleicht. Die Axialabstützung des Gleitschuhs 21 für die Innen- und Außenfeder 23i, 23a dient hier zur Halterung der Innenfeder 23i in der erfindungsgemäßen Weise. Zu diesem Zweck weist der Gleitschuh 21 einen Vorsprung 69 auf, auf dem die erste Windung der Innenfeder 23i im wesentlichen formschlüssig aufsitzt bzw. diesen formschlüssig umgreift.

Aus der Figur 18 entnimmt man ein weiteres Ausführungsbeispiel eines erfindungemäßen Torsionsschwingungsdämpfers im Bereich der Primär- und Sekundäransteuerelemente 15a1, 15s2, 16a. Bei diesem Ausführungsbeispiel ist die Innenfeder 23i ähnlich wie beim Ausführungsbeispiel gemäß der Figur 12 ausgebildet. Die gleitschuhseitige Windung 62 weist einen gegenüber den übrigen Windungen der Innenfeder 23i größeren Durchmesser auf. Dieser Windungsdurchmesser ist vorliegend so gewählt, dass er dem der Außenfeder 23a entspricht. Die Außenfeder 23a ist auf diese äußerste Windung der Innenfeder 23i aufgesetzt und hält dadurch die Innenfeder 23i an der Anlagefläche des Gleitschuhs 21 fest.

Andersendseitig weisen die äußersten Windungen 70 der Innenfeder 23i einen gegenüber den übrigen Windungen geringeren Außendurchmesser auf. Das Primäransteuerelement 16a weist in radialen Abständen der Außenfeder 23a und somit im Abstand des Durchmessers der Außenfeder 23a zwei Vorsprünge 71, 72, welche am äußersten Umfang der Außenfeder 23a und am innersten Umfang der Außenfeder 23a mit dieser in Wirkverbindung verbringbar sind. Die Abmessungen der Vorsprünge 71, 72 in radialer Richtung entsprechen dabei im wesentlichen der Drahtdicke der Außenfeder 23a. Die lichte Höhe h_{L} zwischen den beiden Vorsprüngen 71, 72 ist gerade so gewählt, dass die Innenfeder 23i im wesentlichen ohne Widerstand zwischen die Vorsprünge 71, 72 eintauchen kann.

Weiterhin weist das Primäransteuerelement 16a einen Vorsprung 44 der oben zur Figur 14 beschriebenen Art und entsprechender Funktionalität auf.

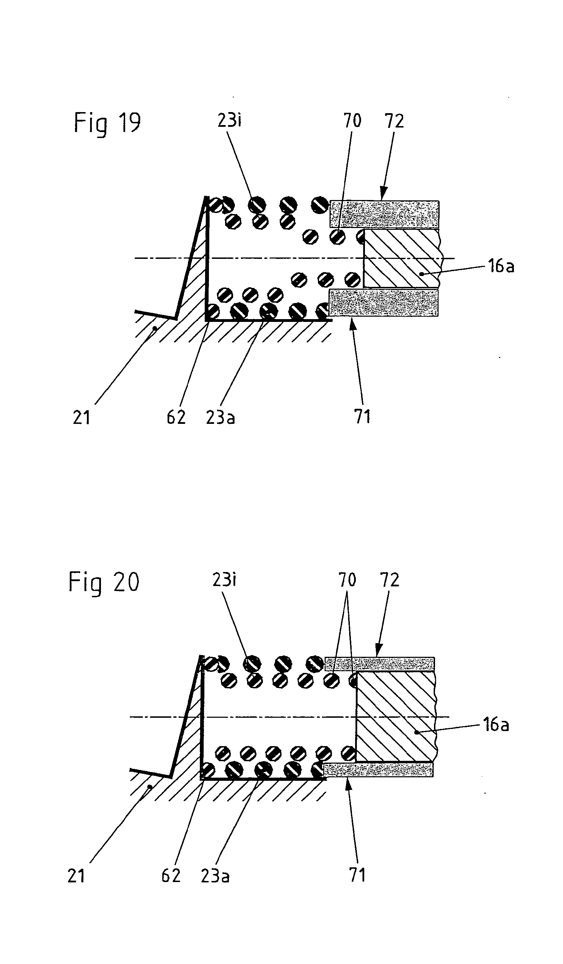

Figur 19 zeigt ein weiteres Ausführungsbeispiel eines Torsionsschwingungsdämpfers. Diese Ausführungsvariante ist weitgehend identisch wie der Torsionsschwingungsdämpfer nach der Figur 18 ausgebildet. Hier wurde lediglich auf den zusätzlichen Vorsprung 44 in radialer Richtung zwischen den Vorsprüngen 71 und 72 verzichtet.

Bei dem Ausführungsbeispiel nach der Figur 20 sind ebenso wie beim Torsionsschwingungsdämpfer nach der Figur 19 zwei Vorsprünge 71, 72 im Primäransteuerelement 16a vorgesehen. Deren Abmessungen in radialer Richtung sind jedoch geringer gewählt als beim vorstehend beschriebenen Ausführungsbeispiel, und zwar derart, dass sie kleiner (oder gleich) dem Durchmesser des Windungsdrahts der Außenfeder 23a sind. Die Windungen 70 der Innenfeder 23i auf der dem Primäransteuerelement 16a zugewandten Seite können daher mit gleichem Außendurchmesser ausgeführt werden, wie die benachbarten Windungen, ohne dass diese ein endseitiges Eintauchen der Innenfeder 23i zwischen die lichte Höhe h_{L} der beiden Vorsprünge 71, 72 behindern.

### Bezugszeichenliste

- 1: Torsionsschwingungsdämpfer

- 10: hintere Seitenscheibe (Sekundärelement)
- 11: vordere Seitenscheibe (Sekundärelement)
- 12: Mittelscheibe (Primärelement)
- 15a1: Sekundäransteuerelement (Vorderteil)
- 15b1: Sekundäransteuerelement (Vorderteil)
- 15a2: Sekundäransteuerelement (Hinterteil)
- 15b2: Sekundäransteuerelement (Hinterteil)
- 16a: Primäransteuerelement
- 16b: Primäransteuerelement

- 21: Gleitschuh Federeinrichtung A
- 22: Trennelement Federeinrichtung A
- 23: Federelement Federeinrichtung A

- 31: Gleitschuh Federeinrichtung B
- 32: Trennelement Federeinrichtung B
- 33: Federelement Federeinrichtung B

- 40a: Ringelement
- 40b: Ringelement
- 41: Napf
- 42: Boden einteilig mit Napf
- 43: zylinderförmige Wandung
- 44: Vorsprung
- 45: Kragen einteilig mit Napf
- 46: Kragen separat
- 47: Boden separat
- 48: Zwischenelement
- 49: zylinderförmige Wandung
- 50: Boden einteilig mit Zwischenelement
- 51: Kragen einteilig mit Zwischenelement
- 52: überstehender Kragen
- 53: Boden/ Kragen
- 54: überstehender Boden/ Kragen
- 55: Deckel
- 56: zylindrischer Grundkörper
- 57: überstehender Deckel
- 58: Bügel
- 59: Haltekragen
- 60: Ellipsoid
- 61: Halteeinrichtung
- 62: Windung mit größerem Radius
- 63: Kragen
- 64: weiterer Vorsprung
- 65: Kegelstumpf
- 66: Kragen
- 67: zylinderförmige Wandung
- 68: zylinderförmige Wandung
- 69: Vorsprung
- 70: Windung mit kleinerem Radius
- 71: Vorsprung
- 72: Vorsprung

- d_{R}: Distanz
- H_{L}: lichte Höhe

## Patentansprüche

1. Torsionsschwingungsdämpfer (1) mit einem motorseitigen Primärelement (12) mit wenigstens einem Primäransteuerelement (16a, 16b) und mit einem getriebeseitigen Sekundärelement (10, 11) mit wenigstens einem Sekundäransteuerelement (15a1, 15b1, 15a2, 15b2) und mit mindestens einer Federeinrichtung (A, B) zur federelastischen Kopplung von Primärelement (12) und Sekundärelement (10, 11), wobei die Federeinrichtung (A, B) wenigstens ein Hauptfederelement (23a) sowie wenigstens ein parallel zu dem Hauptfederelement (23a) geschaltetes Unterfederelement (23b) aufweist, wobei das Hauptfederelement (23a) zu einem einendseitigen Abstützen an einem der Primäransteuerelemente (16a, 16b) und an einem der Sekundäransteuerelemente (10, 11) vorgesehen ist,
**dadurch gekennzeichnet, dass** das Unterfederelement (23i) derart angeordnet ist, dass sich das Unterfederelement (23i) in einem Zugbetrieb und/oder in einem Schubbetrieb und/oder bei einem Lastwechsel, insbesondere in Momentenflußrichtung, nicht gegen das Sekundärsteuerelement (10, 11) abstützen kann.

2. Torsionsschwingungsdämpfer nach Anspruch 1,
**daddurch gekennzeichnet**, dass eine Halteeinrichtung (41, 61, 62, 65) vorgesehen ist, welche das Unterfederelement (23i) derart hält, dass sich das Unterfederelement (23i) in einem Zugbetrieb und/oder in einem Schubbetrieb und/oder bei einem Lastwechsel, insbesondere in Momentenflußrichtung, nicht gegen das Sekundäransteuerelement (10, 11) abstützen kann.

3. Torsionsschwingungsdämpfer nach Anspruch 1 oder 2,
**dadurch gekennzeichnet, dass**
das Unterfederelement (23i) eine geringere Federrate aufweist als das Hauptfederelement (23a).

4. Torsionsschwingungsdämpfer nach einem der Ansprüche 1,2 oder 3,
**dadurch gekennzeichnet, dass**
das Hauptfederelement eine Schraubenfeder (23a) ist und/oder dass das Unterfederelement eine Schraubenfeder (23i) ist.

5. Torsionsschwingungsdämpfer nach Anspruch 4,
**dadurch gekennzeichnet, dass**
das Hauptfederelement eine Außenfeder (23a) ist und dass das Unterfederelement eine innerhalb der Außenfeder (23a) angeordnete Innenfeder (23i) ist.

6. Torsionsschwingungsdämpfer nach Anspruch 5,
**dadurch gekennzeichnet, dass**
die Halteeinrichtung einen, vorzugsweise zylindrischen oder kegelstumpfförmigen, Napf (41, 65) umfasst, welcher sich innerhalb der Außenfeder (23a) fixiert und welcher die Innenfeder (23i) aufnimmt.

7. Torsionsschwingungsdämpfer nach Anspruch 6,
**dadurch gekennzeichnet, dass**
der Napf (41) einendseitig einen umlaufenden Kragen (45, 46, 66) aufweist, welcher sich an einem Ende der Außenfeder (23a) abstützt.

8. Torsionsschwingungsdämpfer nach Anspruch 7,
**dadurch gekennzeichnet, dass**
der Napf (41), insbesondere der Kragen (45, 46), eine Auflagefläche für das Primäransteuerelement (16a, 16b) und/oder für das Sekundäransteuerelement (15a1, 15b1, 15a2, 15b2) aufweist.

9. Torsionsschwingungsdämpfer nach einem der Ansprüche 2 bis 8, insbesondere nach einem der Ansprüche 6, 7 oder 8,
**dadurch gekennzeichnet, dass**
die Halteeinrichtung, insbesondere der Napf (41, 65), derart ausgebildet ist, dass sie, bzw. er, ein auf Block gehen des Hauptfederelements, insbesondere der Außenfeder (23a), und/oder des Unterfederelements, insbesondere der Innenfeder (23i), verhindert.

10. Torsionsschwingungsdämpfer nach einem der vorangegangenen Ansprüche, insbesondere nach einem der Ansprüche 5 bis 9,
**dadurch gekennzeichnet, dass**
das Unterfederelement, insbesondere die Innenfeder (23i), das Hauptfederelement, insbesondere die Außenfeder (23a), zur Herstellung eines, vorzugsweise flächigen, Kontakts zwischen dem Unterfederelement, insbesondere der Innenfeder (23i), und dem Primäransteuerelement (16a, 16b) einendseitig überragt und/oder dass das Primäransteuerelement (16a, 16b) zur Herstellung eines, vorzugsweise flächigen, Kontakts zwischen dem Unterfederelement, insbesondere der Innenfeder (23i), und dem Primäransteuerelement (16a, 16b) einen Vorsprung (44) aufweist und/oder dass zur Herstellung eines, vorzugsweise flächigen, Kontakts zwischen dem Unterfederelement, insbesondere der Innenfeder (23i), und dem Primäransteuerelement (16a, 16b) ein Zwischenelement (48, 60) vorgesehen ist, welches einendseitig auf das Unterfederelement, insbesondere die Innenfeder (23i) aufgesetzt ist oder welches auf das Primäransteuerelement (16a, 16b) aufgesetzt ist.

11. Torsionsschwingungsdämpfer nach Anspruch 10,
**dadurch gekennzeichnet, dass**
eine Führungseinrichtung (49, 59, 67, 68) vorgesehen ist, um das Zwischenelement (48) am Innendurchmesser der Innenfeder (23i) und/oder am Innendurchmesser des Napfs (41) und/oder am Außendurchmesser des Napfs (41) zu führen und/oder dass eine Führungsvorrichtung (63, 65) vorgesehen ist, um das Primäransteuerelement (16a), insbesondere den Vorsprung (44) des Primäransteuerelements (16a), am Außendurchmesser der Innenfeder (23i) und/oder am Innendurchmesser des Napfs (41, 65) zu führen.

12. Torsionsschwingungsdämpfer nach einem der Ansprüche 10 oder 11,
**dadurch gekennzeichnet, dass**
die Halteeinrichtung, insbesondere der Napf (41, 65), eine Haltevorrichtung (59) für das Zwischenelement (60) aufweist oder dass das Primäransteuerelement eine Haltevorrichtung für das Zwischenelement aufweist.

13. Torsionsschwingungsdämpfer nach einem der Ansprüche 10 bis 12,
**dadurch gekennzeichnet, dass**
das Zwischenelement (48, 60) wahlweise längenbündig mit dem Napf (41, 65) abschließt oder vor- oder zurücksteht.

14. Torsionsschwingungsdämpfer nach einem der Ansprüche 6 bis 13,
**dadurch gekennzeichnet, dass**
der Napf (41, 65) eine Innenfederhaltevorrichtung (59, 60; 63, 65) zum Halten der Innenfeder aufweist.

15. Torsionsschwingungsdämpfer nach Anspruch 14,
**dadurch gekennzeichnet, dass**
der Napf (41, 65) einen die Innenfederhaltevorrichtung bildenden nach radial innen weisenden Kragen (63) umfasst, an dem sich die Innenfeder (23i) endseitig abstützt.

16. Torsionsschwingungsdämpfer nach einem der Ansprüche 14 oder 15,
**dadurch gekennzeichnet, dass**
der Napf(41, 65) einen sich einendseitig verjüngenden, insbesondere die Innenfeder (23i) innerhalb des Napfs (41, 65) haltenden, eine Innenfederhaltevorrichtung bildenden Kegel bzw. Kegelstumpf (65) aufweist.

17. Torsionsschwingungsdämpfer nach Anspruch 5,
**dadurch gekennzeichnet, dass**
die Halteeinrichtung (61, 62) Bestandteil eines Gleitschuhs (21) oder eines Trennelements eines Dividerblechs und/oder Bestandteil der Innenfeder (23i), insbesondere wenigstens eine in die Außenfeder (23a) eingreifende Federwindung (62), und/oder Bestandteil der Außenfeder, insbesondere wenigstens eine in die Innenfeder eingreifende Federwindung, ist.

18. Torsionsschwingungsdämpfer nach einem der vorangegangenen Ansprüche, insbesondere nach Anspruch 17,
**dadurch gekennzeichnet, dass**
das Unterfederelement, insbesondere die Innenfeder (23i), das Hauptfederelement, insbesondere die Außenfeder (23a), zur Herstellung eines, vorzugsweise flächigen, Kontakts
zwischen dem Unterfederelement, insbesondere der Innenfeder (23i), und dem Primäransteuerelement (16a) einendseitig überragt und/oder dass das Primäransteuerelement (16a) zur Herstellung eines, vorzugsweise flächigen, Kontakts zwischen dem Unterfederelement, insbesondere der Innenfeder (23i), und dem Primäransteuerelement (16a) einen Vorsprung (44) aufweist und/oder dass zur Herstellung eines, vorzugsweise flächigen, Kontakts zwischen dem Unterfederelement, insbesondere der Innenfeder (23i), und dem Primäransteuerelement (16a) ein Zwischenelement vorgesehen ist, welches einendseitig auf das Unterfederelement, insbesondere die Innenfeder (23i) aufgesetzt ist oder welches auf das Primäransteuerelement (16a) aufgesetzt ist.

19. Torsionsschwingungsdämpfer nach Anspruch 18,
**dadurch gekennzeichnet, dass**
eine Führungseinrichtung vorgesehen ist, um das Zwischenelement am Innendurchmesser der Innenfeder zu führen und/oder dass eine Führungsvorrichtung (64) vorgesehen ist, um das Primäransteuerelement (16a), insbesondere den Vorsprung (44), am Innendurchmesser der Innenfeder (23i) zu führen.
